# EUROPEAN PATENT APPLICATION

(11) **EP 3 358 664 A1**
(43) Date of publication of application: **08.08.2018**
(21) Application number: 16851325.7
(22) Date of filing: 21.09.2016
(51) Int. Cl.: H01M 8/04, C01B 3/38, H01M 8/0606, H01M 8/12

(54) **FUEL CELL REFORMER, FUEL CELL MODULE, AND FUEL CELL DEVICE**

(30) Priority: 30.09.2015 JP 2015194937; 09.03.2016 JP 2016046316
(71) Applicant: KYOCERA Corporation, Kyoto 612-8501 (JP)
(72) Inventor: SUEHIRO, Masanori, Kyoto-shi Kyoto 612-8501 (JP); SUZUKI, Masato, Kyoto-shi Kyoto 612-8501 (JP); ODA, Tomoyuki, Kyoto-shi Kyoto 612-8501 (JP); HARA, Yuuta, Kyoto-shi Kyoto 612-8501 (JP); KOBAYASHI, Nobuhiro, Kyoto-shi Kyoto 612-8501 (JP); OOHI, Noriko, Kyoto-shi Kyoto 612-8501 (JP)
(74) Representative: Viering, Jentschura & Partner mbB Patent- und Rechtsanwälte
(86) International application number: PCT/JP2016/077895
(87) International publication number: WO 2017/057151

(57) **Abstract**

A fuel cell reformer of the invention includes a vaporizing section which vaporizes water into steam; a reforming section which generates a reformed gas by reacting the steam vaporized by the vaporizing section with raw fuel; and a water supply tube constituted so as to extend into the vaporizing section, the water supply tube having a peripheral wall portion, an upper part of the peripheral wall portion being provided with water discharge holes for discharging water inside the vaporizing section to generate a reformed gas by reacting raw fuel with steam. With this constitution, it is possible to improve power generation efficiency or electrolysis efficiency. Also, a fuel cell module and a fuel cell apparatus of the invention include the fuel cell reformer and achieve the same effect.

## Description

### Technical Field

The present invention relates to a fuel cell reformer, a fuel cell module and a fuel cell apparatus.

### Background Art

In recent years, as next-generation energy sources, there have been proposed various fuel cell modules of the type constructed by placing, in a housing, a cell stack device comprising a cell stack composed of an array of a plurality of fuel cells known as one kind of cells (refer to Patent Literatures 1 and 2, for example).

The cell stack device comprises a reformer disposed above the plurality of cell stacks, and the reformer has a U-shape and comprises a vaporizing section which generates steam by vaporizing water and a reforming section which steam-reforms a raw fuel gas using the steam generated in the vaporizing section. A raw fuel gas supply tube and a water supply tube are connected to the vaporizing section communicating with the upstream side of the reformer, the steam generated in the vaporizing section is mixed with the raw fuel gas and supplied to the reforming section, and the raw fuel gas is reformed in the reforming section.

### Citation List

### Patent Literature

Patent Literature 1: WO 2015/080230
Patent Literature 2: Japanese Unexamined Patent Publication JP-A 2007-314399

### Summary of Invention

The fuel cell reformer of the disclosure is a fuel cell reformer for generating a reformed gas by reacting raw fuel with steam. The fuel cell reformer comprises:
a vaporizing section which vaporizes water into steam; and
a reforming section which generates a reformed gas by reacting the steam vaporized by the vaporizing section with the raw fuel. The reformer further comprises:
   a water supply tube constituted so as to extend into the vaporizing section, the water supply tube having a peripheral wall portion, an upper part of the peripheral wall portion being provided with water discharge holes for discharging water inside the vaporizing section.

Furthermore, the fuel cell module of the disclosure comprises:
the fuel cell reformer mentioned above; and
a cell stack which generates electric power by reacting the reformed gas generated by the fuel cell reformer with an oxygen-containing gas.

Moreover, the fuel cell apparatus of the disclosure comprises the fuel cell module mentioned above; an auxiliary which operates the fuel cell module; and
an exterior case which houses therein the fuel cell module and the auxiliary.

### Brief Description of Drawings

Other and further objects, features, and advantages of the invention will be more explicit from the following detailed description taken with reference to the drawings wherein:
FIG. 1 is a perspective view showing an exterior appearance of an example of a cell stack device constituting a fuel cell module comprising a fuel cell reformer according to the present embodiment;
FIG. 2 shows the cell stack device shown in FIG. 1, wherein FIG. 2A is a side view showing the cell stack device, and FIG. 2B is a partially enlarged sectional view showing a portion A enclosed with a broken-line frame in FIG. 2A;
FIG. 3 is a perspective view showing an example of a fuel cell module according to the present embodiment;
FIG. 4 is a sectional view showing the module shown in FIG. 3;
FIG. 5 is a sectional view showing another example of the fuel cell module according to the present embodiment;
FIG. 6 shows the reformer accommodated in the module shown in FIG. 5, the reformer being extracted, wherein FIG. 6A is a perspective view and FIG. 6B is a plan view;
FIG. 7 is an enlarged view showing an area around a tubular portion of a water supply tube, viewed from the left side of FIG. 6;
FIG. 8 is a side view showing a configuration in which the reformer shown in FIG. 6 is provided above the cell stack device according to the present embodiment;
FIG. 9 is a sectional view showing still another example of the fuel cell module according to the present embodiment;
FIG. 10 is a plan view showing a bottom face of an exhaust gas recovering section, part of which is extracted, of the fuel cell module according to the present embodiment;
FIG. 11 is an exploded perspective view schematically showing an example of a fuel cell apparatus according to the present embodiment;
FIG. 12 shows another example of the reformer accommodated in the module shown in FIG. 5, the reformer being extracted, wherein FIG. 12A is a perspective view and FIG. 12B is a plan view;
FIG. 13 is a perspective view showing another example of the reformer accommodated in the module shown in FIG. 5, an internal structure thereof being extracted; and
FIG. 14 is a perspective view showing another example of the reformer accommodated in the module shown in FIG. 5, an internal structure thereof being extracted.

### Description of Embodiments

A fuel cell reformer, a fuel cell module and a fuel cell apparatus according to the present embodiment will be described below referring to the drawings. Common components in different drawings are denoted by the same numerals and signs.

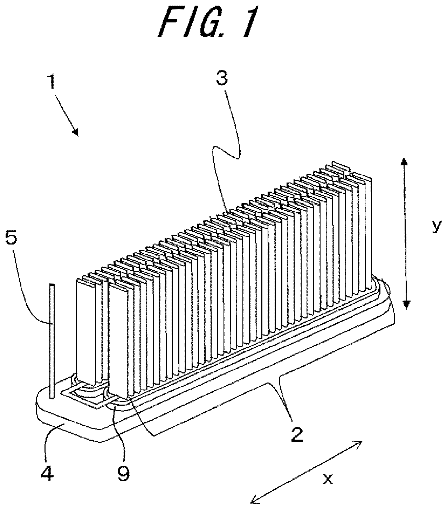

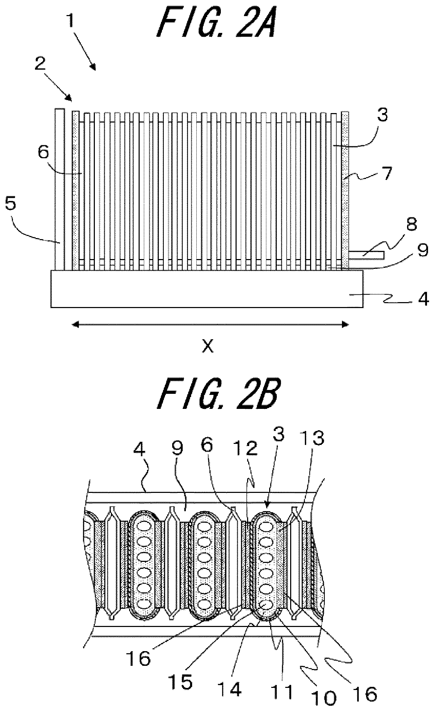

FIG. 1 is a perspective view showing an exterior appearance of an example of a cell stack device constituting a fuel cell module comprising a fuel cell reformer according to the present embodiment, and FIG. 2 shows the cell stack device shown in FIG. 1, wherein FIG. 2A is a side view showing the cell stack device, and FIG. 2B is a partially enlarged sectional view showing the portion A enclosed with the broken-line frame in FIG. 2A. In the following drawings, a cell will be described by mainly using a solid-oxide fuel cell.

In the cell stack device 1 shown in FIGS. 1, 2A and 2B, two cell stacks 2 are provided in juxtaposition. The cell stack 2 is composed of upstanding fuel cells 3 arranged in an array (X direction, as viewed in FIG. 1), the fuel cell 3 having an internal gas flow channel 15 through which a fuel gas is allowed to pass from one end to the other end. Moreover, the adjacent fuel cells 3 are electrically connected in series with each other via an electrically conductive member 6. In addition, in each of the two cell stacks 2, the lower end of the fuel cell 3 is secured to a manifold 4 by an insulating adhesive 9.

In FIGS. 1, 2A and 2B, as an example of the fuel cell 3, there is shown a solid-oxide fuel cell 3 of hollow flat type having a plurality of internal gas flow channels 15 through which a fuel gas flows in a longitudinal direction thereof, the solid-oxide fuel cell 3 being constructed by laminating a fuel electrode layer, a solid electrolyte layer, and an oxygen electrode layer one after another in the order named on the surface of a support having the gas flow channels 15. An oxygen-containing gas is allowed to pass between the fuel cells 3. The structure of the fuel cell 3 will be described later. In the fuel cell apparatus according to the present embodiment, the fuel cell 3 may be shaped in, for example, a flat plate or a circular cylinder, and, the form of the cell stack device 1 may be suitably changed on an as needed basis.

Furthermore, there is provided a cell stack support member 7 (which may hereafter be abbreviated as "stack support member 7") electrically connected via the electrically conductive member 6 to the outermost fuel cell 3 of the cell stack 2. The stack support member 7 may be externally provided with a protective cover. The protective cover provides protection for the stack support member 7 and the cell stack 2 from contact with a heat insulator placed around the cell stack 2 or from external shock. Moreover, the stack support member 7 is connected with a current-extracting portion 8 protruding outwardly beyond the cell stack 2.

Although the cell stack device 1 is illustrated as comprising two cell stacks 2 in FIGS. 1, 2A and 2B, the number of the cell stacks 2 may be changed on an as needed basis. For example, the cell stack device 1 may be composed of a single cell stack 2. Moreover, the cell stack device 1 may include a reformer which will hereafter be described.

Moreover, the manifold 4 comprises: a gas case having an opening in an upper surface thereof, which retains a fuel gas which is fed to the fuel cell 3; and a frame body inside of which the fuel cell 3 is fastened, the frame body being secured to the gas case.

One end (lower end, as viewed in FIG. 2A) of the fuel cell 3 is surrounded by the frame body, and, the lower end of the fuel cell 3 is secured at an outer periphery thereof to the frame body via the insulating adhesive 9 set in a filled state inside the frame body. That is, the cell stack 2 is configured so that a plurality of fuel cells 3 are housed in the frame body while being arranged and are bonded to the frame body via the insulating adhesive 9. As the insulating adhesive 9, it is possible to use an adhesive made of glass, etc. with a predetermined filler added in consideration of a thermal expansion coefficient.

Moreover, there is connected to the upper surface of the manifold 4 a gas passage tube 5 through which a fuel gas generated by a reformer which will hereafter be described flows. The fuel gas is fed to the manifold 4 through the gas passage tube 5, and is then fed from the manifold 4 to the gas flow channel 15 provided within the fuel cell 3.

As shown in FIG. 2B, the fuel cell 3 has the form of a column (hollow flat plate, for example) composed of the columnar electrically conductive support 14 (which may hereafter be abbreviated as "the support") having a pair of opposed flat surfaces, on one of which the fuel-side electrode layer 10, the solid electrolyte layer 11, and the air-side electrode layer 12 are laminated one after another in the order named. Moreover, on the other one of the flat surfaces of the fuel cell 3, there is provided an interconnector 13 whose outer surface (upper surface) is provided with a P-type semiconductor layer 16. By connecting the electrically conductive member 6 to the interconnector 13 via the P-type semiconductor layer 16, it is possible to establish ohmic contact between the electrically conductive member 6 and the interconnector 13, and thereby reduce a drop in potential, wherefore deterioration in electricity collection capability can be avoided effectively. In FIG. 1, the electrically conductive member 6 and the stack support member 7 are omitted from the construction. Moreover, the support 14 may be configured to serve also as the fuel-side electrode layer 10, and, in this case, the cell can be constructed by successively laminating the solid electrolyte layer 11 and the air-side electrode layer 12 in the order named on the surface of the support 14.

The fuel-side electrode layer 10 may be formed of typical known materials, for example, porous electrically conductive ceramics such as ZrO₂ containing rare-earth element oxide in the form of solid solution (called stabilized zirconia, including partially-stabilized zirconia), and Ni and/or NiO.

The solid electrolyte layer 11 is required to serve as an electrolyte for providing electron linkage between the fuel-side electrode layer 10 and the air-side electrode layer 12, and also to have a gas shutoff capability to prevent leakage of a fuel gas and an oxygen-containing gas, and is formed of ZrO₂ containing rare-earth element oxide in the form of solid solution in an amount of 3% to 15% by mole. It is possible to use other material which has the above described characteristics.

The air-side electrode layer 12 may be formed of any material commonly used therefor without special limitations, for example, electrically conductive ceramics composed of so-called ABO₃ perovskite oxide. The air-side electrode layer 12 is required to exhibit gas permeability, and may be configured to have an open porosity of 20% or more, or an open porosity in a range of 30% to 50%.

The support 14 has gas permeability to allow a fuel gas to permeate to the fuel-side electrode layer 10, and also has electrical conductivity for conduction of electricity via the interconnector 13. Thus, as the support 14, it is possible to use electrically conductive ceramics and cermet, for example. In producing the fuel cell 3, in the case where the support 14 is formed through co-firing with the fuel-side electrode layer 10 or the solid electrolyte layer 11, it is advisable to form the support 14 from an iron-group metal component and a specific rare earth oxide.

Moreover, in the fuel cell 3 shown in FIGS. 2A and 2B, the columnar (hollow flat plate-shaped) support 14 has the form of an elongated plate-like piece extending in an upstanding direction (Y direction, as viewed in FIG. 1), and has flat opposite surfaces and semicircular opposite side faces. Moreover, it is preferable that the support 14 has an open porosity of 20% or more, or an open porosity in a range of 25% to 50%, in particular, to exhibit gas permeability. Also, the support 14 may have an electrical conductivity of 300 S or greater/cm, or an electrical conductivity of 440 S or greater/cm, in particular. Moreover, the support 14 is given any of columnar shapes, including a cylindrical shape.

Exemplary of the P-type semiconductor layer 16 is a layer formed of transition metal perovskite oxide. More specifically, it is possible to use a material which is greater in electron conductivity than the material of construction of the interconnector 13, for example, P-type semiconductor ceramics composed of at least one of LaMnO₃-based oxide having Mn, Fe, Co, etc. in the B-site, LaFeO₃-based oxide, LaCoO₃-based oxide, and the like. Under normal circumstances, a thickness of the P-type semiconductor layer 16 may be set to a range of 30 µm to 100 µm.

The interconnector 13, as stated above, may be formed of lanthanum chromite-based perovskite oxide (LaCrO₃ oxide) or lanthanum strontium titanate-based perovskite oxide (LaSrTiO₃-baased oxide). Such a material has electrical conductivity, and undergoes neither reduction nor oxidation when exposed to a fuel gas (hydrogen-containing gas) and an oxygen-containing gas (air, etc.). Moreover, it is advisable to render the interconnector 13 dense in texture for prevention of leakage of a fuel gas flowing through the gas flow channel 15 formed in the support 14 and an oxygen-containing gas flowing outside the support 14, and hence, the interconnector 13 may have a relative density of 93% or more, or 95% or more, in particular.

The electrically conductive member and the stack support member 7 interposed for electrically connecting the fuel cell 3 may be constructed of a member formed of an elastic metal or alloy, or a member obtained by performing a predetermined surface treatment on a felt made of metallic fiber or alloy fiber.

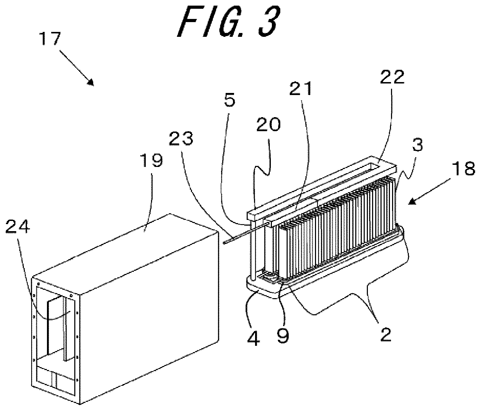

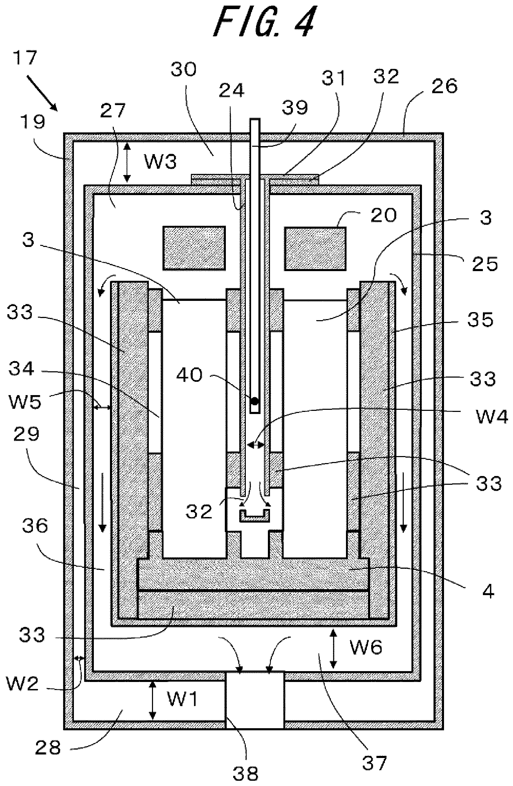

FIG. 3 is an exterior perspective view showing an example of a fuel cell module (hereafter simply referred to as a module) comprising a cell stack device 18 according to the present embodiment, and FIG. 4 is a sectional view showing the module shown in FIG. 3.

In the fuel cell module 17 shown in FIG. 3, the cell stack device 1 according to the present embodiment is housed in a housing 19. Above the cell stack device 1, there is provided a reformer 20 which generates a fuel gas which is fed to the fuel cell 3.

Moreover, the reformer 20 shown in FIG. 1 generates a fuel gas by reforming a raw fuel such as natural gas or kerosene delivered thereto via a raw fuel supply tube 23. The reformer 20 is capable of steam reforming under a reforming reaction with high reforming efficiency. The reformer 20 comprises: a vaporizing section 21 for vaporizing water; and a reforming section 22 provided with a reforming catalyst (not shown) for reforming a raw fuel into a fuel gas.

Moreover, in FIG. 3, there are shown the housing 19 with parts (front and rear surfaces) removed, and the internally housed cell stack device 1 in a state of lying just behind the housing 19. In the fuel cell module 17 shown in FIG. 3, the cell stack device 1 can be slidingly housed in the housing 19.

In the housing 19, there is provided an oxygen-containing gas supply member 24. The oxygen-containing gas supply member 24 is interposed between the cell stacks 2 disposed in juxtaposition on the manifold 4 to allow an oxygen-containing gas to flow between the fuel cells 3 from the lower end toward the upper end.

As shown in FIG. 4, the housing 19 constituting the module 17 has a double-walled structure consisting of an inner wall 25 and an outer wall 26, wherein the outer wall 26 constitutes an outer frame of the housing 19, and the inner wall 25 defines a housing chamber 27 for housing therein the cell stack device 1.

The housing 19 is provided with an oxygen-containing gas introduction section 28 for introducing an oxygen-containing gas externally introduced into the housing chamber 27 The oxygen-containing gas introduced into the oxygen-containing gas introduction section 28 flows upwardly through an oxygen-containing gas passage section 29 defined by the inner wall 25 and the outer wall 26, the oxygen-containing gas passage section 29 merging with the oxygen-containing gas introduction section 28. The oxygen-containing gas subsequently flows through an oxygen-containing gas distributing section 30, the oxygen-containing gas distributing section 30 merging with the oxygen-containing gas passage section 29. In the oxygen-containing gas distributing section 30, the oxygen-containing gas supply member 24 serving as a gas supply section is fixedly inserted so as to pass through the inner wall 25.

The oxygen-containing gas supply member 24 has, at an upper end thereof, an oxygen-containing gas inlet (not shown) for entry of an oxygen-containing gas and a flange portion 31, and also has, at a lower end thereof, an oxygen-containing gas outlet 32 to introduce an oxygen-containing gas into the lower end of the fuel cell 3. Thus, the oxygen-containing gas distributing section 30 and the oxygen-containing gas supply member 24 are connected to each other. A heat insulator 33 is interposed between the flange portion 31 and the inner wall 25.

Although, in FIG. 4, the oxygen-containing gas supply member 24 is arranged between the two cell stacks 2 disposed in juxtaposition in the housing 19, the arrangement may be suitably changed depending upon the number of the cell stacks 2. For example, in the case of housing only one cell stack 2 in the housing 19, two oxygen-containing gas supply members 24 may be arranged so as to sandwich the cell stack 2 from both sides thereof.

Moreover, in the housing chamber 27, there is provided a heat insulator 33 on an as needed basis for maintaining the internal temperature of the fuel cell module 17 at a high-temperature level to prevent a reduction in the amount of electric power generation caused by extreme dissipation of heat within the fuel cell module 17 and a consequent decrease in temperature of the fuel cell 3 (the cell stack 2).

The heat insulator 33 may be placed in the vicinity of the cell stack 2, and, particularly on a lateral side of the cell stack 2 along the arrangement direction of the fuel cells 3. Further, it is advisable to place the heat insulator 33 having a width which is equivalent to or greater than the width of each lateral side of the cell stack 2 along the arrangement direction of the fuel cells 3 on a lateral side of the cell stack 2. The heat insulator 33 may be placed on each lateral side of the cell stack 2. This makes it possible to suppress a decrease in temperature of the cell stack 2 effectively. Moreover, the oxygen-containing gas introduced via the oxygen-containing gas supply member 24 is restrained from being discharged sidewardly from the cell stack 2, thus facilitating the flow of the oxygen-containing gas between the fuel cells 3 constituting the cell stack 2.

Note that the heat insulators 33 disposed on opposite sides, respectively, of the cell stack 2 are each provided with an opening 34 for adjusting the flow of the oxygen-containing gas which is fed to the fuel cell 3 and reducing variations (unevenness) in temperature distribution in the longitudinal direction of the cell stack 2, as well as in the stacking direction of the fuel cell 3.

Moreover, inside the inner wall 25 lying along the arrangement direction of the fuel cells 3, there is provided an inner wall for exhaust gas 35, and, a region between the inner wall 25 at each side of the housing chamber 27 and the inner wall for exhaust gas 35 defines an exhaust gas passage section 36 through which an exhaust gas within the housing chamber 27 flows downwardly.

Moreover, in the lower part of the housing chamber 27 located above the oxygen-containing gas introduction section 28, there is provided an exhaust gas collecting section 37 merging with the exhaust gas passage section 36. The exhaust gas collecting section 37 communicates with a vent hole 38 formed in the bottom portion of the housing 19. Moreover, the inner wall for exhaust gas 35 is also provided on a side of the cell stack 2 with the heat insulator 33.

Thus, an exhaust gas generated during the operation of the fuel cell module 17 (on start-up, during electric power generation, and at halting) flows through the exhaust gas passage section 36 and the exhaust gas collecting section 37, and is thereafter discharged from the vent hole 38. The vent hole 38 may be formed either by cutting part of the bottom portion of the housing 19 or by placement of a tubular member at the bottom portion.

Moreover, inside the oxygen-containing gas supply member 24, a thermocouple 39 for measuring temperature near the cell stack 2 is arranged so that a temperature-measuring section 40 thereof is centered in the longitudinal direction of the fuel cell 3, as well as in the arrangement direction of the fuel cells 3.

Moreover, in the fuel cell module 17 thereby constructed, the temperature of the fuel cell 3 can be raised and maintained by burning the oxygen-containing gas and a fuel gas unused for power generation discharged through the gas flow channel 15 of the fuel cell 3 in a location between the upper end of the fuel cell 3 and the reformer 20. Besides, the reformer 20 located above the fuel cell 3 (the cell stack 2) can be heated, wherefore a reforming reaction occurs efficiently in the reformer 20. During normal electric power-generating operation, with the above-described burning process and power generation in the fuel cell 3, the internal temperature of the fuel cell module 17 is raised to about 500°C to 800°C.

In the interest of improvement in power generation efficiency in the fuel cell 3, each flow channel through which the oxygen-containing gas flows can be configured for efficient oxygen-containing gas flow. That is, the fuel cell module 17 shown in FIG. 4 may be structured for efficient flow and uniform distribution of the oxygen-containing gas which is introduced into the oxygen-containing gas introduction section 28, flows over each side of the housing chamber 27, and is introduced through the oxygen-containing gas distributing section 30 into the oxygen-containing gas supply member 24.

That is, in the fuel cell module 17 according to the present embodiment, a width W2 of the oxygen-containing gas passage section 29 is narrower than a width W1 of the oxygen-containing gas introduction section 28. This allows the oxygen-containing gas introduced into the oxygen-containing gas introduction section 28 to flow efficiently to the oxygen-containing gas passage section 29.

The width W2 of the oxygen-containing gas passage section 29 may be adjusted to an extent that would prevent occurrence of a blockage in the oxygen-containing gas passage section 29 even if the inner wall 25 or the outer wall 26 becomes deformed due to deterioration in the housing 19 with age, and it is advisable for the width W2 to fall in the range of one-third to one-thirtieth of the width W1 of the oxygen-containing gas introduction section 28. Although the width W1 of the oxygen-containing gas introduction section 28 is not limited to any specific value, when the width is too large, there arises the problem of an increase in size of the module.

Note that with respect to the widths W2 (one of the widths W2 is not shown) of the oxygen-containing gas passage sections 29 located on opposite lateral sides, respectively, of the housing chamber 27, variation between their widths can be tolerated within ±10% limits. Thus, the oxygen-containing gas introduced into the oxygen-containing gas introduction section 28 is allowed to flow over each lateral side of the housing chamber 27 in substantially the same amount.

Next, a width W4 of the oxygen-containing gas supply member 24 is narrower than a width W3 of the oxygen-containing gas distributing section 30. This allows the oxygen-containing gas introduced into the oxygen-containing gas distributing section 30 to flow efficiently to the oxygen-containing gas supply member 24.

The width W4 of the oxygen-containing gas supply member 24 may be adjusted to an extent that would prevent occurrence of a blockage in the oxygen-containing gas supply member 24 even if the oxygen-containing gas supply member 24 becomes deformed due to deterioration with age, and it is advisable for the width W4 to fall in the range of one-half to one-thirtieth of the width W3 of the oxygen-containing gas distributing section 30. Although the width W3 of the oxygen-containing gas distributing section 30 is not limited to any specific value, when the width is too large, there arises the problem of an increase in size of the module. Further, the above-described widths may be determined with consideration given to pressure loss at the oxygen-containing gas outlet 32.

Meanwhile, in the housing chamber 27, there arise exhaust gases such as a fuel gas unused for power generation, the oxygen-containing gas, and a combustion gas resulting from the burning of the fuel gas are generated. Efficient discharge of such exhaust gases out of the housing 19 leads to efficient supply of the oxygen-containing gas to the fuel cell 3.

Hence, in the fuel cell module 17 according to the present embodiment, a width W5 of the exhaust gas passage section 36 located at each lateral side of the housing chamber 27 is narrower than a width W6 of the exhaust gas collecting section 37 located on a lower side of the housing chamber 27. This allows the exhaust gases that have flowed through the exhaust gas passage section 36 on the respective lateral sides of the housing chamber 27 are efficiently mixed with each other in the exhaust gas collecting section 37, and the mixture is discharged out of the construction efficiently through the vent hole 38.

The width W5 of the exhaust gas passage section 36 may be adjusted to an extent that would prevent occurrence of a blockage in the exhaust gas passage section 36 even if the exhaust gas passage section 36 becomes deformed due to deterioration with age, and it is advisable for the width W5 to fall in the range of one-third to one-thirtieth of the width W6 of the exhaust gas collecting section 37. Although the width W6 of the exhaust gas passage section 36 is not limited to any specific value, when the width is too large, there arises the problem of an increase in size of the module.

Note that with respect to the widths W5 (one of the widths W5 is not shown) of the exhaust gas passage sections 36 located at opposite lateral sides, respectively, of the housing chamber 27, variation between their widths W5 can be tolerated within ±10% limits. Thus, the exhaust gas present in the housing chamber 27 is allowed to flow through each lateral side of the housing chamber 27 in substantially the same amount.

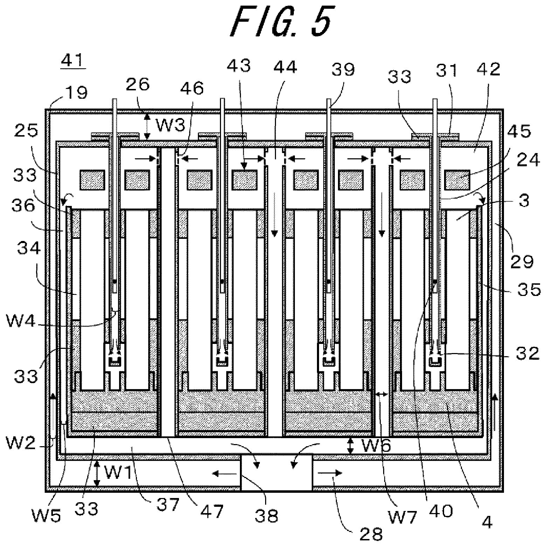

FIG. 5 is a sectional view showing another example of the module according to the present embodiment. A module 41 as shown in FIG. 5 differs from the module 17 shown in FIG. 4 in that four cell stack devices 43 are placed in a housing chamber 42, that an exhaust gas passage member 44 is disposed in each cell stack device 43-to-cell stack device 43 region, and that a single reformer 45 is located above the four cell stacks as shown in FIG. 5. Note that such constituent components as are common to those of the fuel cell module 17 shown in FIG. 4 will be identified with the same reference designations, and the description of the common components will be omitted.

In the case of housing the plurality of cell stack devices 43 in the housing chamber 42, a distance from the fuel cell 3 of the centrally located cell stack device 43 to the exhaust gas passage section 36 located on a lateral side of the housing chamber 42 becomes particularly long. Hence, there may be cases where it is difficult to discharge exhaust gases from the fuel cell 3 of the centrally located cell stack device 43 to the outside with efficiency.

For example, in the fuel cell apparatus configured so that a fuel gas unused for power generation is burned on the upper end side of the fuel cell 3 and the resultant combustion heat is utilized to maintain the temperature of the fuel cell 3 at a high level, staying of exhaust gases on the upper end side of the fuel cell 3 may cause a failure of combustion of the fuel gas unused for power generation, with the consequent occurrence of combustion misfiring. In the event of combustion misfiring in particular, the fuel cell fails to undergo a temperature rise or cannot be maintained in high-temperature conditions, which may result in a reduction in the amount of electric power generation in the fuel cell 3 (cell stack device 43).

For the purpose of solving this problem, in the fuel cell module 41 shown in FIG. 5, in addition to the above-described exhaust gas passage section 36, the exhaust gas passage member 44 is provided between the adjacent cell stack devices 43 for discharging an exhaust gas unused for power generation.

In the exhaust gas passage member 44 composed of a tubular container, an upper end thereof has exhaust gas inlets 46 provided on each lateral side thereof so as to communicate with the housing chamber 42, and an outlet 47 which is a lower end thereof communicates with the exhaust gas collecting section 37 located on a lower side of the housing chamber 42. While, in FIG. 5, the exhaust gas passage member 44 is, as exemplified, composed of a tubular container in the form of a rectangular prism, an arrangement of a plurality of cylindrical containers may be adopted instead.

That is, either the exhaust gas passage section 36 or the exhaust gas passage member 44 is disposed on the lateral side of each cell stack device 43, and, an exhaust gas unused for power generation flows efficiently through one of the exhaust gas passage section 36 and the exhaust gas passage member 44 that is closer to the corresponding cell stack 2 constituting each cell stack device 43.

This arrangement makes it possible to suppress staying of exhaust gases emissions on the upper end of the fuel cell 3, and thus permits efficient discharge of exhaust gases. Also, in the cell stack device 43 in which burning is effected above the fuel cell 3, the occurrence of combustion misfiring can be suppressed, whereby the amount of electric power generation is improved.

A width W7 of the exhaust gas passage member 44 is narrower than a width W6 of the exhaust gas collecting section 37. This allows the exhaust gases that have flowed through their respective exhaust gas passage members 44 are efficiently mixed with each other in the exhaust gas collecting section 37, and the mixture is discharged out of the construction through the vent hole 38.

More specifically, it is advisable for the width W7 of the exhaust gas passage member 44 to fall in the range of one-third to one-thirtieth of the width W6 of the exhaust gas collecting section 37. Although the width W6 of the exhaust gas collecting section 37 is not limited to any specific value, when the width is too large, there arises the problem of an increase in size of the module.

Note that with respect to the widths W7 (only one is shown) of the individual exhaust gas passage members 44, variation between their widths W7 can be tolerated within ±10% limits. Thus, the exhaust gas flows through each exhaust gas passage member 44 in substantially the same amount.

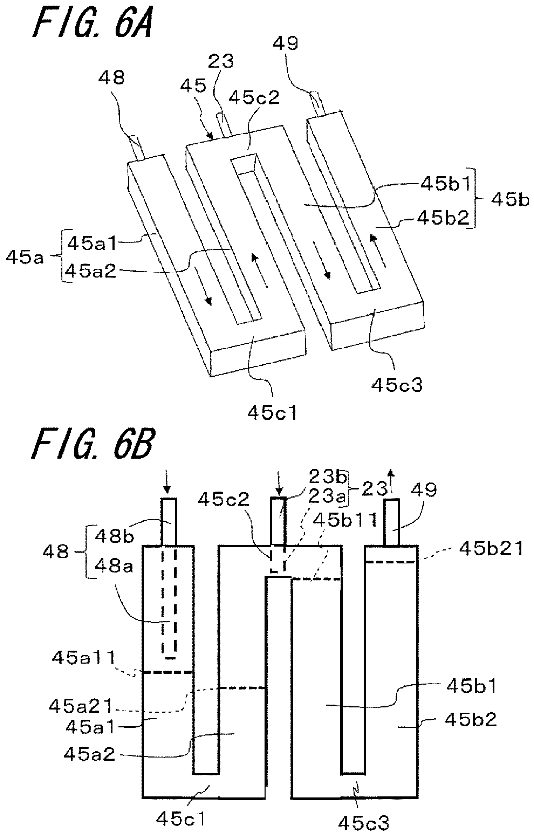

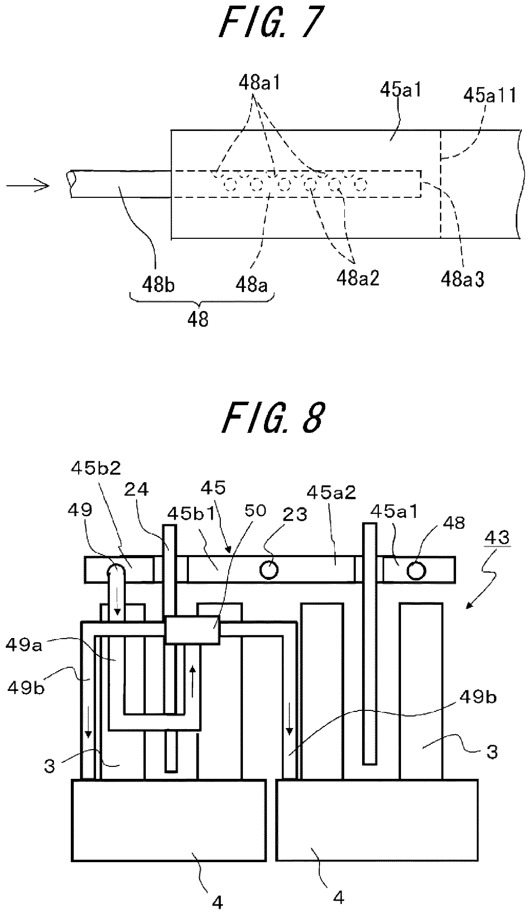

FIG. 6A and FIG. 6B are respectively a perspective view and a plan view showing the reformer housed in the module shown in FIG. 5, the reformer being extracted, and FIG. 7 is an enlarged view showing the area around the tubular portion 48a of a water supply tube 48, viewed from the left sides of FIGS. 6A and 6B, and FIG. 8 is a side view showing a configuration in which the reformer shown in FIGS. 6A and 6B is provided above the cell stack device according to the present embodiment.

In the module 41 shown in FIG. 5, the W-shaped reformer 45 (in meandering form) shown in FIGS. 6A and 6B is disposed above four cell stacks 2.

As shown in FIGS. 6A and 6B, the reformer 45 comprises: a vaporizing section 45a for generating water vapor by vaporizing water; and a reforming section 45b for performing steam reforming on a raw fuel with use of the water vapor generated by the vaporizing section 45a.

The vaporizing section 45a comprises: a vaporizing section forward path 45a1 through which water vapor flows from one end to the other end thereof; and a vaporizing section backward path 45a2 through which water vapor flows from the other end to one end thereof. Moreover, the vaporizing section forward path 45a1 comprises a tubular portion 48a protruding inwardly along the vaporizing section forward path 45a1 from one end thereof, and a water supply portion 48b connected to the one end to feed water to the tubular portion 48a. The tubular portion 48a may be made either in separate form or in unitary form; that is, in the former, the tubular portion 48a is disposed so as to extend inwardly from an edge of a tubular body constituting the vaporizing section 45a, and a water supply tube 48 serving as the water supply portion 48b is connected to, and in axial alignment with, the tubular portion 48a, whereas, in the latter, the water supply tube 48 serving as the water supply portion 48b is inserted into the tubular body from the outside, and part of the water supply tube 48 serves also as the tubular portion 48a. The following description deals with the unitary form using the water supply tube 48 inserted into the tubular body from the outside.

Moreover, the reforming section 45b comprises: a reforming section forward path 45b1 through which a reformed gas flows from one end to the other end thereof, the reformed gas being generated by reforming a raw fuel supplied via the raw fuel supply tube 23 serving as a raw fuel supply section; and a reforming section backward path 45b2 through which the reformed gas flows from the other end to one end thereof. A reformed gas lead-out tube 49 for leading out the reformed gas is connected to the reforming section backward path 45b2. In the reformer 45 shown in FIG. 6, the water supply tube 48, the raw fuel supply tube 23, and the reformed gas lead-out tube 49 are connected to one end of the reformer 45.

Moreover, in the reformer 45, the other end of the vaporizing section forward path 45a1 and the other end of the vaporizing section backward path 45a2 are coupled by a coupling path 45c1 (hereafter referred to as "vaporizing section coupling path"). In addition, one end of the vaporizing section backward path 45a2 and one end of the reforming section forward path 45b1 are coupled by a coupling path 45c2 (hereafter referred to as "vaporizing/reforming section coupling path"). Further, the other end of the reforming section forward path 45b1 and the other end of the reforming section backward path 45b2 are coupled by a coupling path 45c3 (hereafter referred to as "reforming section coupling path). The vaporizing section forward path 45a1, the vaporizing section backward path 45a2, the reforming section forward path 45b1, and the reforming section backward path 45b2 are juxtaposed so as to face their side surfaces.

The water supply tube 48 is provided with a plurality of water discharge holes 48a1 in the upper part of the tubular portion 48a serving as the peripheral wall portion of the portion to be inserted into the vaporizing section forward path 45a1. Hence, water flows out while being dispersed along the peripheral face of the tubular portion 48a, whereby heat exchange is performed directly between the tubular portion 48a and water. Furthermore, a plurality of water discharge holes 48a2 may also be provided on both sides of the intermediate part in the vertical direction. With this configuration, water can be discharged efficiently. Moreover, the tip end of the tubular portion 48a may be blocked with an end wall portion 48a3. Hence, the water flowing through the tubular portion 48a can be made to flow out while being dispersed further along the peripheral face of the tubular portion 48a. The water supply tube 48 having this kind of configuration can also be used preferably to uniformly supply water to the reformer 20 shown FIG. 3 described before.

In the reformer 45, water supplied to the vaporizing section forward path 45a1 overflows from the respective water discharge holes 48a1 and 48a2 of the tubular portion 48a and flows out while being dispersed along the peripheral face of the tubular portion 48a, whereby heat exchange can be performed directly between the tubular portion 48a and water. As a result, the vaporization of water is promoted, and the supplied water can be vaporized efficiently. Furthermore, in the case where water is vaporized inside the tubular portion 48a, steam is discharged from the respective water discharge holes 48a1 and 48a2 and flows while being dispersed along the peripheral face of the tubular portion 48a. The steam generated in this way flows sequentially to the vaporizing section coupling path 45c1, the vaporizing section backward path 45a2, the vaporizing/reforming section coupling path 45c2 and the reforming section forward path 45b1. Moreover, a raw fuel is fed to the vaporizing/reforming section coupling path 45c2 from the raw fuel supply tube 23 serving as a raw fuel supply section 23b, is mixed with water vapor in the vaporizing/reforming section coupling path 45c2, flows through the reforming section forward path 45b1, the reforming section coupling path 45c3, and the reforming section backward path 45b2 while undergoing a reforming reaction to generate a reformed gas containing hydrogen (a fuel gas), and is led out in the form of the fuel gas from the reformed gas lead-out tube 49.

The vaporizing section forward path 45a1, the vaporizing section backward path 45a2, the reforming section forward path 45b1, the reforming section backward path 45b2, the vaporizing section coupling path 45c1, the vaporizing/reforming section coupling path 45c2, and the reforming section coupling path 45c3 are each composed of a tubular body which is rectangular in transverse section.

Moreover, partition sheets 45a11 and 45a21 are disposed inside the vaporizing section forward path 45a1 and the vaporizing section backward path 45a2, respectively, so that a region between these partition sheets 45a11 and 45a21 defines a vaporizing chamber. The head part (tubular portion) of the water supply tube 48 is positioned on the upstream side of the partition sheet 45a11 so as to deliver water to a location just ahead of the vaporizing chamber.

With this configuration, local temperature drop in the area on the upstream side from the partition sheet 45a11 of the vaporizing section forward path 45a1 is prevented, whereby fluctuations in temperature distribution are prevented and temperature distribution is made uniform. Furthermore, since the temperature distribution is made uniform, the occurrence of misfire can be prevented and power generation efficiency or reforming efficiency can be improved. Moreover, ceramic balls are housed in the vaporizing chamber to promote vaporization, and the partition sheets 45a11 and 45a21 are formed so as to allow steam to pass through but formed so as not to allow the ceramic balls to pass through. The arrangement of the partition sheets 45a11 and 45a21 can be changed appropriately depending on the structure of the reformer, the structure of the cell stack to be described later, etc.

Furthermore, in the vaporizing section 45a, the ceramic balls can be prevented from entering the water supply tube 48 from the water discharge holes 48a1 and 48a2 by making the diameters of the water discharge holes 48a1 and 48a2 smaller than the grain diameter of the ceramic balls. With this configuration, the ceramic balls can be filled into the area on the further upstream side from the partition sheets 45a11 and the vaporization of water can be promoted in a state where the partition sheet 45a11 to be disposed on the upstream side is removed or remains provided. In the case where the particle diameter of the ceramic balls is in the range of 2 mm to 4 mm, the diameters of the water discharge holes 48a1 and 48a2 being in the range of 1.5 mm to 3. 5 mm, for example, are selected.

Still further, partition sheets 45b11 and 45b21 are disposed inside the reforming section forward path 45b1 and the reforming section backward path 45b2, respectively, and the reforming section forward path 45b1, the reforming section coupling path 45c3 and the reforming section backward path 45b2 positioned between the partition sheets 45b11 and 45b21 serve as a reforming chamber. A reforming catalyst is housed in this reforming chamber. The partition sheets 45b11 and 45b21 are configured so that gas, such as steam, raw fuel and reformed gas, can pass therethrough but configured so that the reforming catalyst cannot pass therethrough. The arrangement of the partition sheets 45b11 and 45b21 can be changed appropriately depending on the structure of the reformer, the structure of the cell stack to be described later, etc.

In such a reformer 45, the raw fuel supply tube 23 which is the raw fuel supply section 23b which supplies a raw fuel is connected to the vaporizing/reforming section coupling path 45c2 between the vaporizing section 45a and the reforming section 45b. In such a reformer 45, since the raw fuel supply tube 23 is connected to the vaporizing/reforming section coupling path 45c2 located downstream from the vaporizing section forward path 45a1 connected with the water supply tube 48, a water supply point and a raw fuel supply point are located through a space between the tubular body constituting the vaporizing section forward path 45a1 and the tubular body constituting the vaporizing section backward path 45a2. Also, in terms of the direction in which water vapor flows, a length in the flowing direction is long. Hence, even if a raw fuel is of a low temperature, at a point of time when an additional raw fuel is mixed, most of the supplied water has been vaporized, and thus it is possible to suppress a decrease in temperature of part of the reformer 45 (the vaporizing section forward path 45a1). This makes it possible to increase the reforming efficiency.

Then, as shown in FIG. 8, the reformed gas (fuel gas) generated by the reformer 45 is fed to two manifolds 4 by the reformed gas lead-out tube 49, and is fed through each manifold 4 to the gas flow path 15 within the furl cell 3.

As shown in FIG. 8, the reformed gas generated by the reformer 45 is fed, through a distributor 70, to the two manifolds 4 by the reformed gas lead-out tube 49. That is, the reformed gas lead-out tube 49 comprises: a U-shaped first reformed gas lead-out tube 49a extending from the reformer 45 to the distributor 70; and second reformed gas lead-out tubes 49b extending downwardly from the distributor 70 to the two manifolds 4, respectively. For the purpose of feeding the reformed gas to the manifolds 4 uniformly, the first reformed gas lead-out tube 49a and the second reformed gas lead-out tube 49b have the same length in consideration of pressure loss.

In the reformer 45, the vaporizing section forward path 45a1, the vaporizing section backward path 45a2, the reforming section forward path 45b1, and the reforming section backward path 45b2 are each disposed above corresponding one of the cell stacks 2. This allows each of the vaporizing section forward path 45a1, the vaporizing section backward path 45a2, the reforming section forward path 45b1, and the reforming section backward path 45b2 to be heated efficiently.

Moreover, other structural features (for example, the positions of the water supply tube 48, the partition sheets, etc.) may be suitably changed on an as needed basis without being limited to the foregoing.

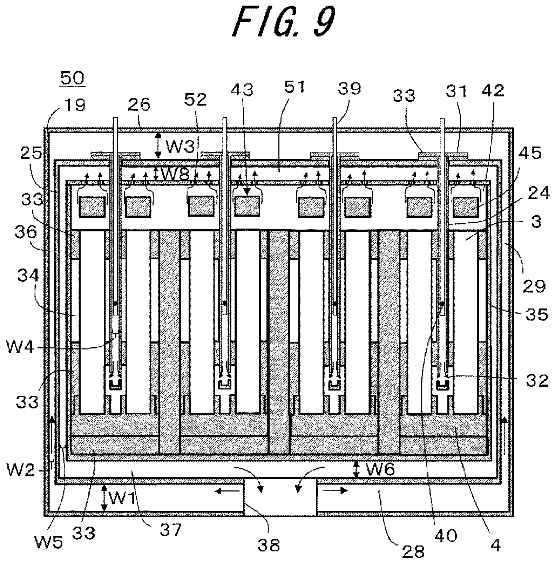

FIG. 9 is a sectional view showing still another example of the fuel cell module according to the present embodiment.

A module 50 as shown in FIG. 9 differs from the module 41 shown in FIG. 5 in that the module 50 is devoid of the exhaust gas passage member 44 disposed in each cell stack device 43-to-cell stack device 43 region, and yet has an exhaust gas collecting section 51 for collecting exhaust gases from the fuel cell 3, the exhaust gas collecting section 51 being located above the housing chamber 42, the exhaust gas collecting section 51 merging with the exhaust gas passage section 36.

The module 41 shown in FIG. 5, while having the advantage of being capable of efficient discharge of exhaust gases from the fuel cell 3 out of the construction, has room for improvement in respect of heat exchange between an externally supplied oxygen-containing gas and an exhaust gas from the fuel cell 3, because the exhaust gas flowing through the exhaust gas passage member 44 undergoes no heat exchange with the externally supplied oxygen-containing gas.

In this regard, in the module 50 shown in FIG. 9, since there is provided the exhaust gas collecting section 51 located above the housing chamber 42, the exhaust gas collecting section 51 collecting exhaust gases from the fuel cell 3, and, the exhaust gas collecting section 51 merges with the exhaust gas passage section 36, heat exchange can take place between the externally supplied oxygen-containing gas and the total amount of exhaust gases from the fuel cell 3. This makes it possible to feed the oxygen-containing gas kept at an elevated temperature to the fuel cell 3, and thereby increase the power generation efficiency.

It is advisable to allow the exhaust gas collected in the exhaust gas collecting section 51 to flow efficiently to the exhaust gas passage section 36. Hence, in the module 50 according to the present embodiment, a width W5 of the exhaust gas passage section 36 is narrower than a width W8 of the exhaust gas collecting section 51. Thus, the exhaust gas collected in the exhaust gas collecting section 51 is allowed to flow efficiently to the exhaust gas passage section 36 located on each side of the housing chamber 42. This makes it possible to improve heat exchange with the oxygen-containing gas, and to increase power generation efficiency.

It is advisable that the width W5 of the exhaust gas passage section 36 falls in the range of one-third to one-thirtieth of the width W8 of the exhaust gas collecting section 51. Although the width W8 of the exhaust gas collecting section 51 is not limited to any specific value, when the width is too large, there arises the problem of an increase in size of the module.

Moreover, the bottom surface of the exhaust gas collecting section 51 is provided with a collecting hole 52 merging with the housing chamber 42. Thus, the exhaust gas discharged into the housing chamber 42 flows through the collecting hole 52 to the exhaust gas collecting section 51.

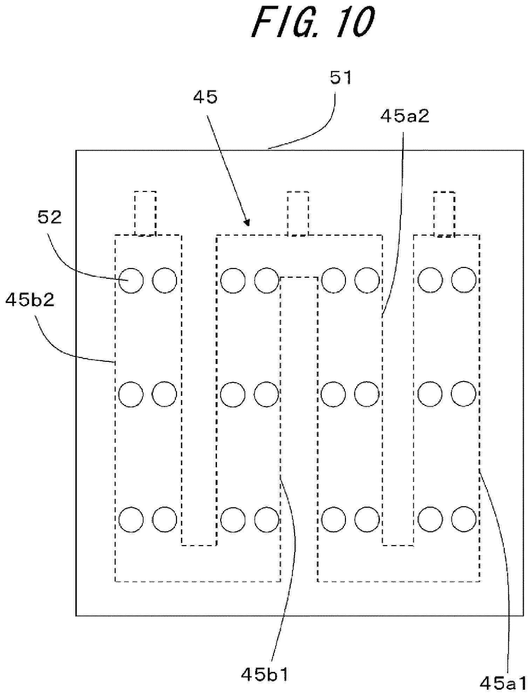

FIG. 10 is a plan view showing the bottom face of the exhaust gas recovering section 51, part of which is extracted, and the reformer 45 is indicated by broken lines so that the positional relationship with the reformer 45 can be recognized.

As shown in FIG. 10, there are provided a plurality of collecting holes 52 at the bottom surface of the exhaust gas collecting section 51 so as to face the reformer 45. As described earlier, the reformer 45 is heated by the combustion heat resulting from the burning of the exhaust gas from the fuel cell 3, and as a result it is possible to increase reforming efficiency. It is thus advisable that the exhaust gas from the fuel cell 3 (exhaust combustion gas) flows to the exhaust gas collecting section 51 after flowing around the reformer 45.

Hence, in the module 50 according to the present embodiment, the collecting holes 52 are opposed to the reformer 45. With this arrangement, the exhaust gas from the fuel cell 3 (exhaust combustion gas) is allowed to flow to the exhaust gas collecting section 51 efficiently after flowing around the reformer 45. This makes it possible to raise the temperature of the reformer 45 efficiently, and thereby increase the reforming efficiency.

In FIG. 10, while the same number of collecting holes 52 are provided so as to be opposed to the vaporizing section forward path 45a1, the vaporizing section backward path 45a2, the reforming section forward path 45b1, and the reforming section backward path 45b2, respectively, in the reformer 45, the number of the collecting holes 52 is not limited to this.

For example, in the reformer 45, the vaporizing section forward path 45a1 is susceptible to a temperature decrease under an endothermic reaction entailed by water vaporization, and this may lead to a decrease in temperature of the cell stack 2 located below the vaporizing section forward path 45a1. Hence, for the purpose of raising the temperature of the vaporizing section forward path 45a1, the number of the collecting holes 52 opposed to the vaporizing section forward path 45a1 may be increased. The number and arrangement of the collecting holes 52 can be suitably determined.

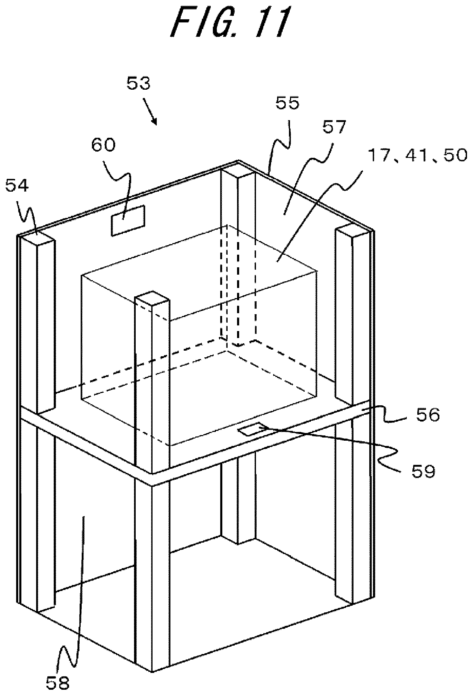

FIG. 11 is an exploded perspective view schematically showing a fuel cell apparatus configured so that any one of the modules 17, 41, and 50 and auxiliaries for operating the module are housed in an exterior case. In FIG. 11, part of the construction is omitted.

In the fuel cell apparatus 53 shown in FIG. 11, the interior of the exterior case composed of a plurality of supports 54 and exterior plates 55 is divided into an upper space and a lower space by a partition plate 56, the upper space defining a module housing chamber 57 for receiving therein the above-described module, the lower space defining an auxiliary housing chamber 58 for housing therein auxiliaries for operating the module. The auxiliaries housed in the auxiliary housing chamber 58 are not shown in the drawing.

Moreover, the partition plate 56 is provided with an air passage port 59 for allowing air present in the auxiliary housing chamber 58 to flow toward the module housing chamber 57, and also, part of the exterior plate 55 surrounding the module housing chamber 57 is provided with an air outlet 60 for discharging air present in the module housing chamber 57.

In such a fuel cell apparatus, any one of the above-described modules is housed in the exterior case, and hence the fuel cell apparatus 53 which achieves an improvement in power generation efficiency can be realized.

Although the invention has been described in detail, it is understood that the invention is not limited to the embodiments as described heretofore, and various changes, modifications, and improvements are possible without departing from the scope of the invention.

For example, although the module 41, 50 according to the above-described embodiment has been illustrated as comprising the cell stack device constructed by disposing a single reformer 45 above four cell stacks 2, the cell stack device may be constructed by, for example, disposing a single reformer 45 above two or three cell stacks 2, or by disposing a single reformer 45 above five or more cell stacks 2. In this case, the form of the reformer 45 may be suitably changed on an as needed basis.

Moreover, although in the embodiments as described heretofore, the arrangement wherein two cell stacks 2 are placed on a single manifold 4 has been illustrated, a single cell stack 2 may be placed on a single manifold 4, or three or more cell stacks 2 may be placed on a single manifold 4.

In addition, although the embodiment using the fuel cell 3 of so-called longitudinal stripe configuration has been illustrated, it is possible to use a segmented-in-series fuel cell stack comprising a plurality of power-generating element portions of so-called circumferential stripe configuration disposed on a support.

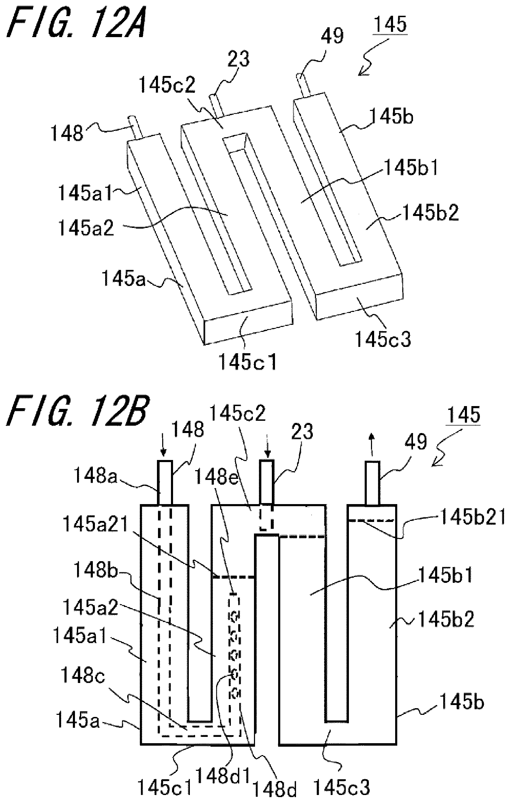

FIG. 12 is a perspective view showing another example of the reformer housed in the module shown in FIG. 5, the reformer being extracted, wherein FIG. 12A is a perspective view showing the reformer and FIG. 12B is a plan view showing the reformer. The reformer 145 according to the present embodiment is different from the reformer 45 shown in FIGS. 6A and 6B and housed in the module 41 shown in FIG. 5 in the configurations of the vaporizing section and the water supply tube. The differences from the reformer 45 shown in FIG. 6 will mainly be described below.

The vaporizing section 145a provided in the reformer 145 comprises: a vaporizing section forward path 145a1 and a vaporizing section backward path 145a2 which communicates with the vaporizing section forward path 145a1 and through which steam flows from the other end side to the one end side. Furthermore, a water supply tube 148 is inserted into the vaporizing section forward path 145a1 from one end thereof. The water supply tube 148 is installed so as to extend from the vaporizing section forward path 145a1 to the vaporizing section backward path 145a2 via a vaporizing section coupling path 145c1 serving as part of the vaporizing section 145a.

The water supply tube 148 comprises: a water supply portion 148a protruding from the one end side of the vaporizing section forward path 145a1 to the outside, a first tubular portion 148b disposed inside the vaporizing section forward path, a second tubular portion 148c disposed inside the vaporizing section coupling path 145c1 and a third tubular portion 148d disposed inside the vaporizing section backward path 145a2. In other words, the water supply section 148 is disposed so as to extend from the vaporizing section forward path 145a1 to the vaporizing section backward path 145a2. The entire shape of the water supply section 148 disposed inside the vaporizing section 145a is a J-shape or a U-shape in a plan view from above.

A plurality of water discharge holes 148d1 is provided in the upper part (on the front side in a direction perpendicular to the plane of paper in FIG. 12) of the peripheral wall portion of the third tubular portion 148d inside the vaporizing section backward path 145a2. A plurality of water discharge holes may be provided on both sides of the intermediate part in the vertical direction. Furthermore, the tip end 148e of the water supply section 148 is closed. Moreover, although the water discharge holes 148d1 are provided only in the third tubular portion 148d, they may further be provided in the second tubular portion 148c and the first tubular portion 148b.

In the vaporizing section backward path 145a2 of the reformer 145, the water supplied to the water supply section 148 overflows from the water discharge holes 148d1 of the third tubular portion 148d. The overflowed water flows while being dispersed along the peripheral face of the third tubular portion 148d, whereby heat exchange can be performed directly between the water supply tube 148 and water. As a result, the vaporization of water is promoted, and the supplied water can be vaporized efficiently.

Furthermore, in the case where water is vaporized inside the tubular portions 148b to 148d, steam is discharged from the respective water discharge holes 148d1 and 148d2 and flows while being dispersed along the peripheral face of the third tubular portion 148d. The steam generated in this way flows to a vaporizing/reforming section coupling path 145c2 and a reforming section forward path 145b1. Still further, in the vaporizing/reforming section coupling path 145c2, raw fuel is supplied from the raw fuel supply tube 23. The raw fuel is mixed with steam in the vaporizing/reforming section coupling path 145c and is reformed while flowing through the reforming section forward path 145b1, a reforming section coupling path 145c3 and a reforming section backward path 145b2, whereby reformed gas (fuel gas) containing hydrogen is generated and led out from the reformed gas lead-out tube 49.

The vaporizing section forward path 145a1, the vaporizing section coupling path 145c1, the vaporizing section backward path 145a2, the vaporizing/reforming section coupling path 145c2, the reforming section forward path 145b1, the reforming section coupling path 145c3 and the reforming section backward path 145b2 communicate sequentially in this order; they are tubular bodies having rectangular cross sections.

In addition, a partition sheet 145a21 is provided inside the vaporizing section forward path 145a2, and the space between the one end side of the vaporizing section forward path and the partition sheet 145a21 is used as a vaporizing chamber, and the tip end 148e of the water supply tube 148 is positioned on the upstream side of the partition sheet 45a21.

In the reformer 145 configured as described above, the water supplied to the water supply tube 148 is sufficiently heated and vaporized by the relatively long water supply tube 148 disposed along the vaporizing section forward path 145a1, the vaporizing section coupling path 145c1 and the vaporizing section backward path 145a2 and can be discharged from the water discharge holes 148d1 as high temperature steam. Hence, even if the raw fuel supplied from the raw fuel supply tube 23 that is connected to the vaporizing/reforming section coupling path 145c2 on the downstream side from the vaporizing section backward path 145a2 is low in temperature, the temperature drop in the reformer can be suppressed, whereby reforming efficiency can be improved. Furthermore, since the generation efficiency of steam is improved, a more amount of reformed water can be supplied to the reformer 145. Moreover, since the quality of the gas reformed by the reformer 145 is improved, the fuel cells can be operated stably over a long period of time.

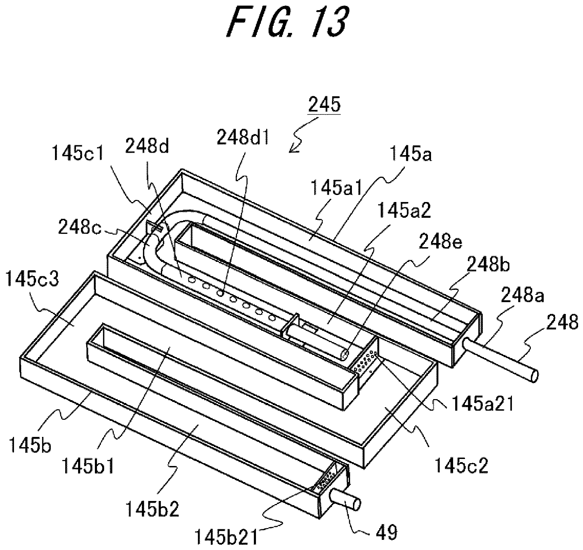

FIG. 13 is a perspective view showing still another example of the reformer housed in the module shown in FIG. 5, the internal structure thereof being extracted. The reformer 245 according to the present embodiment is different from the above-mentioned reformer shown in FIG. 12 in the configurations of the water supply tube and the fuel supply tube. The components corresponding to those in the above-mentioned embodiment are denoted by the same reference numerals and signs.

A double tube 248 serving as a water supply tube and a raw fuel supply tube has an outer tube and an inner tube; raw fuel is allowed to pass through the inner tube, and water is allowed to pass through an outer flow channel formed between the inner tube and the outer tube. The double tube 248 which is inserted from one end side of the reforming section forward path to the inside of the reformer 145 is composed of a supply portion 248a protruding from one end of the vaporizing section forward path 145a1, a first double tube portion 248b disposed inside the vaporizing section forward path, a second double tube portion 248c disposed inside the vaporizing section coupling path 145c1 and a third double tube portion 248d disposed inside the vaporizing section backward path 145a2. The entire shape of the double tube 248 is a J-shape or a U-shape in a plan view. In addition, at an end 248e of the double tube 248, the inner tube is opened, but a space between the inner tube and the outer tube is closed.

The water supplied to the outer flow channel of the double tube 248 is heated while flowing through the first double tube portion 248b, the second double tube portion 248c and the third double tube portion 248d. After that, the water flows out from the water discharge holes 248d1 opened only in the outer tube of the third double tube portion 248d and turns into steam, or while flowing through the respective double tube portions, the water turns into steam and is discharged from the water discharge holes 248d1.

Furthermore, the fuel gas supplied to the inner tube of the double tube 248 is heated while flowing through the first double tube portion 248b, the second double tube portion 248c and the third double tube portion 248d and then flows out from the end 248e of the double tube, the inner tube of which is opened.

The raw fuel having flowed out from the end 248e of the double tube passes through the vaporizing/reforming section coupling path 145c2 while being mixed with the steam generated in the vaporizing section 145a and is reformed while passing through the reforming section forward path 145b1, the reforming section coupling path 145c3 and the reforming section backward path 145b2, and is then led out from the reformed gas lead-out tube 49 as reformed gas.

Since the raw fuel having high temperature and the steam join by virtue of the double tube 248 which is provided so as to extend from the vaporizing section forward path 145a1 to the vaporizing section backward path 145a2, temperature drop in the reforming section 145b can be suppressed, whereby reforming efficiency can be improved.

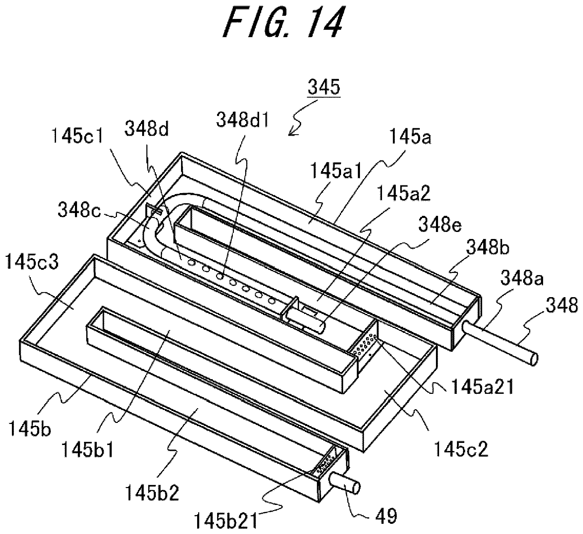

FIG. 14 is a perspective view showing yet still another example of the reformer accommodated in the module shown in FIG. 5, the internal structure thereof being extracted. The reformer 345 according to the present embodiment is different from the above-mentioned reformer shown in FIG. 13 in the configuration of the water supply tube. The components corresponding to those in the above-mentioned embodiment are denoted by the same reference numerals and signs.

Water and raw fuel to be supplied to the reformer 345 are preliminarily mixed outside the reformer 345 and are then supplied to the water supply tube 348 shown in FIG. 14, although this is not shown in the figure. In other words, the water supply tube 348 is a common tube for supplying water together with raw fuel, whereby the number of tubes to be connected to the reformer 345 can be reduced.

The water supply tube 348 is composed of a water supply portion 348a protruding to the outside from one end of the vaporizing section forward path 145a1, a first tubular portion 348b disposed in the vaporizing section forward path, a second tubular portion 348c disposed in the vaporizing section coupling path 145c1, and a third tubular portion 348d disposed in the vaporizing section backward path 145a2. The water supply tube 348 is disposed so as to extend from the vaporizing section forward path 145a1 to the vaporizing section backward path 145a2. The entire shape of the water supply tube 348 disposed inside the vaporizing section 145a is a J-shape or a U-shape in a plan view. An end 348e of the water supply tube 348 is closed.

The water supplied by the water supply tube 348 configured as described above is heated while flowing through the first tubular portion 348b, the second tubular portion 348c and the third tubular portion 348d. After that, the water flows out from the water discharge holes 348d1 provided in the third tubular portion 348d and turns into steam, or while flowing through the respective tubular portions, the water turns into steam and is discharged from the water discharge holes 348d1. In particular, in the case where the water turns into steam while flowing through the respective tubular portions, the steam is discharged from the water discharge holes 348d1 in a state of being mixed with the raw fuel. As a result, the steam and the raw fuel are discharged from the water discharge holes in a state of being mixed sufficiently and then flow to the reforming section, whereby reforming efficiency can be improved.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

### Reference Signs List

2: Cell stack
17, 41, 50: Fuel cell module
20, 45, 145, 245, 345: Reformer
21, 45a, 145a: Vaporizing section
22, 45b, 145b: Reforming section
48, 148, 348: Water supply tube
53: Fuel cell apparatus

## Claims

1. A fuel cell reformer for generating a reformed gas by reacting raw fuel with steam, comprising:
a vaporizing section which vaporizes water into steam;
a reforming section which generates a reformed gas by reacting the steam vaporized by the vaporizing section with raw fuel; and
a water supply tube constituted so as to extend into the vaporizing section, the water supply tube having a peripheral wall portion, an upper part of the peripheral wall portion being provided with water discharge holes for discharging water inside the vaporizing section.

2. The fuel cell reformer according to claim 1, wherein an intermediate part of the peripheral wall portion in a vertical direction thereof is also provided with water discharge holes for discharging water inside the vaporizing section.

3. The fuel cell reformer according to claim 1 or 2, wherein a tip end of the water supply tube is closed.

4. The fuel cell reformer according to any one of claims 1 to 3, wherein granular ceramic balls are housed in the vaporizing section, and
the water discharge holes each have a diameter smaller than a particle diameter of the granular ceramic balls.

5. The fuel cell reformer according to any one of claims 1 to 4, wherein the vaporizing section comprises:
a vaporizing section forward path, and
a vaporizing section backward path which communicates with the vaporizing section forward path and through which steam flows to one end side from the other end side of the vaporizing section backward path, and
the water supply tube is inserted into the vaporizing section forward path and is disposed so as to extend from vaporizing section forward path to the vaporizing section backward path.

6. A fuel cell module, comprising:
the fuel cell reformer according to any one of claims 1 to 5; and
a cell stack which generates electric power by reacting the reformed gas generated by the fuel cell reformer with an oxygen-containing gas.

7. A fuel cell apparatus, comprising:
the fuel cell module according to claim 6;
an auxiliary which operates the fuel cell module; and
an exterior case which houses therein the fuel cell module and the auxiliary.
